# EUROPEAN PATENT SPECIFICATION

(11) **EP 1 106 651 B1**
(45) Date of publication and mention of the grant of the patent: **05.01.2011**
(21) Application number: 00111580.7
(22) Date of filing: 30.05.2000
(51) Int. Cl.: C08L 55/02, C08L 51/04, C08K 5/523

(54) **Flameproof thermoplastic resin composition**
Feuerfeste thermoplastische Harzzusammensetzung
Composition ininflammable de résine thermoplastique

(30) Priority: 30.11.1999 KR 9953747
(43) Date of publication of application: 13.06.2001
(73) Proprietor: Cheil Industries Inc., Kumi-shi, Kyungbuk (KR)
(72) Inventor: Hong, Sang-Hyun, Anyang-shi, Kyungki-do 430-016 (KR); Kweon, Yong-Hae, Seoul 156-773 (KR); Jang, Bok-Nam, Seoul 135-220 (KR); Chang, Young-Kil, Seoul 156-093 (KR); Lee, Gyu-Cheol, Suwon-shi, Kyungki-do 440-330 (KR)
(74) Representative: Hering, Hartmut

(56) References cited:
- EP-A- 0 007 460
- EP-A- 0 640 655
- EP-A- 0 682 081
- EP-A- 0 700 969
- GB-A- 2 336 158
- GB-A- 2 341 184
- US-A- 4 360 618
- US-A- 4 618 633

## Description

The present invention relates to a flameproof thermoplastic resin composition free of phenolic resin. More particularly, the present invention relates to a flameproof thermoplastic resin composition free of phenolic resin that comprises a styrene-acrylonitrile (SAN) graft copolymer, alternatively a rubber modified SAN copolymer resin, and a polyphenylene ether resin as a base resin, and a phosphoric acid ester compound resin as a flame retardant.

A rubber modified styrene-containing resin has a good processability, a high impact strength, and a good appearance. Accordingly, the resin has been widely applied to electric appliances and office supplies. In case that a rubber modified styrene-containing resin is applied to personal computers, facsimiles, which emit heat, flame-retardant property should be given to the resin due to its combustibility.

A widely known method for the flame retardancy is that halogen-containing compounds and antimony-containing compounds are added to a rubber modified styrene-containing resin to give flame-retardant property. The halogen-containing compounds used in the method above are, for example, polybromodiphenyl ether, tetrabromobisphenol A, epoxy compounds substituted by bromine, chlorinated polyethylene, etc. An antimony trioxide and anntimony pentaoxide are commonly used as antimony-containing compounds.

The methods for improvement of flame-retardant property by applying halogen- and antimony-containing compound have advantages such as easy acquirement of the flame-retardant property and no degradation of the physical properties. However, the disadvantages could be observed that the halogen-containing compound results in the corrosion of the mold itself by the hydrogen halide gases released during the molding process and is fatally harmful due to the toxic gases liberated in case of fire. Especially, since a polybromodiphenyl ether, mainly used for a halogen-containing flame retardant, can produce toxic gases such as dioxin or furan during combustion, flame retardant which is not prepared with halogen-containing compound has become main concerns in this field.

It is commonly known a method to apply phosphorus or nitrogen compounds as halogen-free flame retardant to a resin composition. However, usage of only phosphorus compound deteriorates heat resistance of a rubber modified styrene-containing resin and does not impart sufficient flame retardancy.

Generally, when a rubber modified styrene-containing resin such as acrylonitrile-butadiene-styrene (ABS) is burned, char is scarcely produced due to decomposition and vaporization in most parts (Journal of Applied Polymer Science, 1998, vol. 68, p 1067). Therefore, to impart an effect of flame retardancy, it is necessary to add a char-forming agent to a resin composition, which plays a role to prohibit entrance of oxygen and emission of fuel by forming char on the surface of rubber with three-dimensional carbon chain bonds under combustion.

GB2336158 and GB2341184 disclose flameproof thermoplastic resin compositions comprising rubber modified SAN graft copolymer, phenolic resin, PPE resin, and aromatic phosphoric acid ester.

US4618633 disclose flame retardant self-extinguishing thermoplastic compositions comprising mixtures of SAN copolymer resins, phosphorous-containing compounds, a phenol aldehyde resin, a PPE resin, and optionally a diene elastomer grafted with styrene/acrylonitrile.

Japanese Patent Laid-open No. 7-48491 discloses a flameproof thermoplastic resin, made of adding a novolac phenolic resin and a phosphoric acid ester in to a thermoplastic copolymer resin composed of a rubber copolymer and an aromatic vinyl monomer. It was found that in order to obtain a good property of flame retardancy, a phenolic resin as a char-forming agent and a phosphoric acid ester compound as a flame retardant should be added in a large amount. However, in this case, the heat resistance of the resin composition is dropped suddenly. Therefore, many studies have been done to prepare a flameproof resin composition which does not contain phenol resin but shows a good flame retardancy and heat-resistant.

U.S. Patent No. 4,360,618 discloses that the impact strength and heat-resistance of a resin composition was improved by mixing SAN resin or ABS resin copolymer with 2 to 8 % by weight of acrylonitrile to improve compatibility of polyphenylene ether and styrene-containing resin with acrylonitrile. And, U.S. Patent No. 4,578,423 discloses that the mechanical properties of a resin composition with a high content of acrylonitrile were maintained by blending 10 to 90 % by weight of polyphenylene ether with 10 to 90 % by weight of SAN resin or ABS resin copolymer with 8 to 17 % by weight of acrylonitrile (standard deviation of % by weight of acrylonitrile being not less than 3.5 %). But, if the content of acrylonitrile was higher than that of polyphenylene ether, the compatibility of styrene-containing resin and polyphenylene ether deteriorated, so the mechanical property of the resin deteriorated.

The present inventors have prepared a rubber modified SAN copolymer resin with 15 to 40 % by weight of acrylonitrile of a SAN copolymer resin excluding rubber on applying a SAN graft copolymer as continuous phase resin in order to solve the problem above. That is, the present inventors have discovered a resin composition free of phenolic resin with a high impact strength and a flame retardancy by blending a polyphenylene ether resin with a rubber modified SAN copolymer resin excluding rubber, which comprises 5 to 20 % by weight of SAN copolymer resin with 0 to 9 % by weight of acrylonitrile, 10 to 40 % by weight of SAN copolymer resin with 9 to 20 % by weight of acrylonitrile, and 40% to 80 % by weight of SAN copolymer resin with 20 to50 % by weight of acrylonitrile, and by using an aromatic phosphoric acid ester compound as a flame retardant.

An object of the present invention is to provide a flameproof thermoplastic resin composition free of phenolic resin that has a good mechanical property and flame retardancy.

Another object of the present invention is to provide a flameproof thermoplastic resin composition free of phenolic resin that does not contain halogen-containing compounds that causes the environmental pollution during the preparation or combustion of the resin.

A further object of the present invention is to provide a flameproof thermoplastic resin composition free of phenolic resin with a high compatibility of polyphenylene ether resin and rubber modified SAN copolymer resin by using a rubber modified SAN copolymer resin excluding rubber, which has 15 to 40 % by average weight of acrylonitrile, comprising 5 to 20 % by weight of SAN copolymer resin with 0 to 9 % by weight of acrylonitrile, 10 to 40 % by weight of SAN copolymer resin with 9 to 20 % by weight of acrylonitrile, and 40 to 80 % by weight of SAN copolymer resin with 20 to50 % by weight of acrylonitrile on preparing a blend of rubber modified SAN copolymer resin and polyphenylene ether resin.

The flameproof thermoplastic resin composition free of phenolic resin of the present invention comprises (A) 40 to 95 parts by weight of a rubber modified SAN graft copolymer resin composed of (A₁) 20 to 100 % by weight of SAN graft copolymer resin with 10 to 60 % by weight of a rubber and 90 to 40 % by weight of SAN copolymer resin, and (A₂) 80 to 0 % by weight of SAN copolymer; wherein said rubber modified SAN graft resin has an average weight of 15 to 40 % by weight of acrylonitrile per the SAN resin excluding rubber component; (B) 5 to 60 parts by weight of polyphenylene ether resin; (C) 5 to 30 parts by weight of aromatic phosphoric acid ester per 100 part by weight of a base resin which comprises (A) and (B), with the SAN copolymer resin comprising (i) 5 to 20 % by weight of SAN copolymer resin with 0 to 9 % by weight of acrylonitrile, (ii) 10 to 40 % by weight of go SAN copolymer resin with 9 to 20 % by weight of acrylonitrile, and (iii) 40 to 80 % by weight of SAN copolymer resin with 20 to 50 % by weight of acrylonitrile.

The detailed descriptions of components of the resin composition according to the present invention are as follows:

### (A) Rubber Modified SAN Copolymer Resin

A rubber modified SAN copolymer resin means a rubber phase copolymer which is dispersed in the form of particles in a matrix comprising aromatic vinyl-containing copolymers. The resin is prepared by mixing an aromatic vinyl monomer and a vinyl-containing monomer, which can be polymerized therewith, in the presence of a rubber phase polymer.

In the rubber-modified SAN copolymer resin, the SAN resin excluding rubber contains 15 to 40 % by average weight of acrylonitrile and comprises three components as follows:
(1) 5 to 20 % by weight of SAN copolymer resin with 0 to 9 % by weight of acrylonitrile;
(2) 10 to 40 % by weight of SAN copolymer resin with 9 to 20 % by weight of acrylonitrile; and
(3) 40 to 80 % by weight of SAN copolymer resin with 20 to 50 % by weight of acrylonitrile.

Such resin is prepared by a known method such as an emulsion polymerization, a suspension polymerization or a bulk polymerization, and is conventionally produced by extrusion with a styrene-containing graft copolymer resin and a styrene-containing copolymer resin. In a bulk polymerization, both a styrene-containing graft copolymer resin and a styrene-containing copolymer resin are not prepared separately but prepared together in one process, thereby to produce a rubber modified styrene-containing resin. In either case, the contents of rubber in the final rubber modified styrene-containing resin to the total weight of the base resin are preferably in 5 to 30 parts by weight.

Examples of such resins are acrylonitrile-butadiene-styrene (ABS) copolymer resin, acrylonitrile-acryl rubber-styrene (AAS) copolymer resin, acrylonitrile-ethylenepropylene rubber-styrene (AES) copolymer resin.

In preparing the resin, the SAN graft copolymer resin (A₁) can be used alone or in combination with the SAN copolymer resin (A₂), it is preferable that they are combined with consideration of their compatibility. In this invention, 20 to 100 % by weight of the SAN graft copolymer resin (A₁) is used in combination with 0 to 80 percent by weight of the SAN copolymer resin (A₂).

### (A₁) SAN Graft Copolymer Resin

Examples of a rubber used for a styrene-containing graft copolymer resin are a diene-containing rubber such as a polybutadiene, poly(styrene-butadiene) and a poly(acrylonitrile-butadiene); a saturated rubber in which hydrogen is added to said diene-containing rubber; an isoprene rubber; a chloroprene rubber; a poly (butyl acrylate); and a terpolymer of ethylene-propylene-diene. It is preferable to use a diene-containing rubber, more preferably a butadiene-containing rubber.

Aromatic vinyl-containing monomers for use preparing the graft copolymer are styrene, α-methylstyrene, p-methylstyrene. In the above examples, styrene is most preferable. At least one copolymerizable monomer may be introduced and applied to said aromatic vinyl monomers. Preferably, said copolymerizable monomers are acrylonitrile and an unsaturated nitrile-containing compound such as methacrylonitrile, and most preferably the monomer is acrylonitrile.

It is preferable that the rubber content of the graft copolymer is 10 to 60 % by weight. The SAN copolymer grafted the rubber is prepared by polymerizing 60 to 85 % by weight of aromatic vinyl-containing monomer and 15 to 40 % by weight of unsaturated nitrile-containing monomer. In addition, in order to give good characteristics of processability and heat resistance, the monomers such as acrylic acid, methacryl acid, maleic anhydride and N-substituted maleimide can be added in the graft polymerization. The amounts of the monomers are in the range of 0 to 40 parts by weight based on the total of said graft copolymer resin.

To acquire good impact strength and appearance when said SAN graft copolymer is prepared, the average size of rubber particles is preferred to be in the range of from 0.1 to 4 µm.

### (A₂) Styrene-Acrylonitrile (SAN) Copolymer Resin

In the polymerization process of rubber modified SAN copolymer resin, the SAN copolymer resin may be prepared separately and then blended with SAN graft copolymer resin (A₁) as needed. The SAN copolymer resin is prepared by polymerizing 60 to 85 % by weight of aromatic vinyl-containing monomer such as styrene and 15 to 40 % by weight of unsaturated nitrile-containing monomer. In addition, in order to give good characteristics of processability and heat resistance, the monomers such as acrylic acid, methacryl acid, maleic anhydride and N-substituted maleimide can be added in the graft polymerization. The amounts of the monomers are in the range of 0 to 40 parts by weight based on the total of said SAN copolymer resin.

The resin is prepared by a known method such as an emulsion polymerization, a suspension polymerization or a bulk polymerization, it is preferred that weight average molecular weight of the resin ranges from 50,000 to 400,000. The examples of the copolymerizable monomer to the SAN copolymer resin are methacrylate or phenyl maleimide and so on, and in order to improve a heat resistance, styrene can be alternated with α-methylstyrene.

### (B) Polyphenylene Ether Resin

Polyphenylene ether resin is employed as a base resin to improve the flame retardancy, heat resistance and rigidity of the resin composition according to the present invention. As examples of the polyphenylene ether resin, poly(2,6-dimethyl-1,4-phenylene) ether, poly(2,6-diethyl-1,4-phenylene) ether, poly(2,6-dipropyl-1,4-phenylene) ether, poly(2-methyl-6-ethyl-1,4-phenylene) ether, poly(2-methyl-6-propyl-1,4-phenylene) ether, poly(2-ethyl-6-propyl-1,4-phenylene) ether, poly(2,6-diphenyl-1,4-phenylene) ether, copolymer of poly(2,6-dimethyl-1,4-phenylene) ether and poly(2,3,6-trimethyl-1,4-phenylene) ether, and copolymer of poly(2,6-dimethyl-1,4-phenylene) ether and poly(2,3,5-triethyl-1,4-phenylene) ether can be used. Preferably, copolymer of poly(2,6-dimethyl-1,4-phenylene) ether and poly(2,3,6-trimethyl-1,4-phenylene) ether, and poly(2,6-dimethyl-1,4-phenylene) ether are preferably used, more preferably poly(2,6-dimethyl-1,4-phenylene) ether is used. The degree of polymerization of polyphenylene ether is not defined specifically, but considering heat-stability or processability of the resin composition, it is preferable that the viscosity of polypheylene ether is in the range of 0.2 to 0.8 measured in chloroform solvent at 25 °C.

### (C) Aromatic Phosphoric Acid Ester Compound

The aromatic phosphoric acid ester compound used in the present invention is a compound having the following structural formula (I): 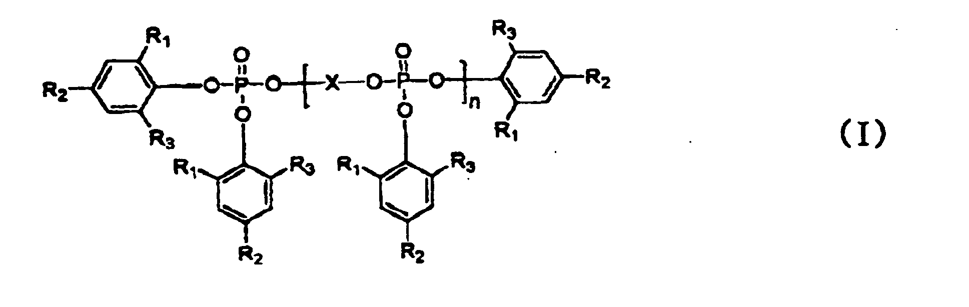 wherein R₁, R₂ and R₃ independently of one another are hydrogen or C₁-C₄ alkyl group, X is C₆-C₂₀ aryl or alkyl substituted C₆-C₂₀ aryl group which is dialcohol derivatives such as resorcinol, hydroquinol, and n is 0~4. In the structural formula (I), where n is 0, the compound include triphenyl phosphate, tricresyl phosphate, trixylenyl phosphate, tri(2,6-dimethyl phenyl) phosphate, tri(2,4,6-trimethyl phenyl) phosphate, tri(2,4-ditertiary butyl phenyl) phosphate, tri(2,6-ditertiary butyl phenyl) phosphate, and where n is 1, the compound include resorcinol bis (diphenyl) phosphate, resorcinol bis(2,6-dimethyl phenyl) phosphate, resorcinol bis(2,4-ditertiary butyl phenyl) phosphate, hydroquinone (2,6-dimethyl phenyl) phosphate, hydroquinone(2,4-ditertiary butyl phenyl) phosphate. The phosphoric acid ester compound may be used alone or mixture there of, and is employed in the amount of 5 to 30 parts by weight per 100 parts by weight of the base resin which comprises (A) and (B)

Other additives may be contained in the resin composition of the present invention. The additives include an anti-dripping agent, an impact modifier, plasticizer, a heat stabilizer, an oxidation inhibitor, a light stabilizer, a compatibilizer. An inorganic filler such as talc, silica, mica, glass fiber, organic or inorganic pigment and/or dye can be added too. The additives are employed in the amount of 0 to 30 parts by weight on the basis of 100 parts by weight of the base resin.

The invention may be better understood by reference to the following examples. In the following examples, all parts and percentage are by weight unless otherwise indicated.

### EXAMPLES

(A) Rubber modified SAN copolymer resin, (B) polyphenylene ether resin, and (C) phosphoric acid ester compound employed to prepare the resin compositions in Examples and Comparative Examples are as follows:

### (A) Rubber Modified SAN Copolymer Resin

### (A₁ₐ) SAN Graft Copolymer Resin with 22 % by average weight of AN in the SAN copolymer resin excluding rubber

50 parts by weight of butadiene rubber latex powder (on the basis of solid parts), 39 parts by weight of styrene, and 150 parts by weight of deionized water were blended to the blend, 1.0 parts by weight of rosin soap as an emulsifying agent, 0.3 parts by weight of cumenhydroperoxide, 0.2 parts by weight of mercaptan-containing chain transfer agent, 0.4 parts by weight of glucose, 0.01 parts by weight of ferrous sulfate hydrate, and 0.3 parts by weight of sodium pyrophosphate were added. The blend was kept at 75 °C for 4 hours, and the reaction was terminated by injecting 11 parts by weight of acrylonitrile to obtain graft ABS latex. To the ABS latex solid powder, 0.4 parts by weight of sulfuric acid was added, coagulated and dried to obtain SAN graft copolymer resin (g-ABS) in a powder form.

As a result of analysis of the SAN copolymer resin excluding rubber, it comprises 8 parts by weight of SAN copolymer resin with 0 to 9 % by weight of acrylonitrile, 37 parts by weight of SAN copolymer resin with 9 to 20 % by weight of acrylonitrile, and 55 parts by weight of SAN copolymer resin with not less than 20 % by weight of acrylonitrile.

### (A_{1b}) Graft ABS Resin with 22 % by average weight of AN in the SAN copolymer resin excluding rubber

50 parts by weight of butadiene rubber latex powder (on the basis of solid parts), 39 parts by weight of styrene, 11 parts by weight of acrylonitrile, and 150 parts by weight of deionized water were blended to the blend, 1.0 parts by weight of rosin soap as emulsifying agent, 0.3 parts by weight of cumenhydroperoxide, 0.2 parts by weight of mercaptan-containing chain transfer agent, 0.4 parts by weight of glucose, 0.01 parts by weight of ferrous sulfate hydrate, and 0.3 parts by weight of sodium pyrophosphate were added. The blend was kept at 75°C for 4 hours, and the reaction was terminated by injecting 11 parts by weight of acrylonitrile to obtain graft ABS latex. To the ABS latex solid powder, 0.4 parts by weight of sulfuric acid was added, coagulated and dried to obtain SAN graft copolymer resin (g-ABS) in a powder form.

As a result of analysis of the SAN copolymer resin excluding rubber, it has not more than 3 parts by weight of SAN copolymer resin with not more than 20 % by weight of acrylonitrile.

### (A₂ₐ) SAN Copolymer Resin with 25 % by average weight of AN

75 parts by weight of styrene, 5 parts by weight of acrylonitrile, 120 parts by weight of deionized water, 0.2 parts by weight of 1.1'-di(t-butylperoxy)-3,3'-5-trimethyl cyclohexane, and 0.1 parts by weight of azobisisobutylonitrile were blended. To the blend, 0.4 parts by weight of tricalciumphosphate and 0.2 parts by weight of mercaptan-containing chain transfer agent were added. The resultant solution was heated to 80 °C for 90 minutes and kept for 150 minutes. 20 parts by weight of acrylonitrile injected to the resultant solution, the resultant solution reheated to 95°C, kept for 120 minutes, then the SAN copolymer resin with 25 % by average weight of AN was prepared. The resultant was washed, dehydrated and dried. Styrene-acrylonitrile copolymer (SAN) having a weight average molecular weight of 100,000 to 140,000 was obtained.

As a result of analysis of the SAN copolymer resin, it comprises 9 parts by weight of SAN copolymer resin with 0 to 9 % by weight of acrylonitrile, 35 parts by weight of SAN copolymer resin with 9 to 20 % by weight of acrylonitrile, and 56 parts by weight of SAN copolymer resin with not less than 20 % by weight of acrylonitrile.

### (A_{2b}) SAN copolymer resin with 25 % by average weight of AN

75 parts by weight of styrene, 25 parts by weight of acrylonitrile, 120 parts by weight of deionized water, 0.15 parts by weight of azobisisobutylonitrile, 0.4 parts by weight of tricalciumphosphate, and 0.2 parts by weight of mercaptan-containing chain transfer agent were blended. The resultant solution was heated from room temperature to 80°C for 90 minutes and kept for 180 minutes, then the SAN copolymer resin with 25 % by average weight of AN was prepared. The resultant was washed, dehydrated and dried. Styrene-acrylonitrile copolymer (SAN) having a weight average molecular weight of 160,000 to 200,000 was obtained.

As a result of analysis of the SAN copolymer resin, it comprises not more than 3 parts by weight of SAN copolymer resin with not more than 20 % by weight of acrylonitrile.

### (A_{2c})SAN Copolymer Resin with 13 % by average weight of AN

87 parts by weight of styrene, 13 parts by weight of acrylonitrile, 120 parts by weight of deionized water, 0.1 parts by weight of azobisisobutylonitrile, 0.2 parts by weight of 1.1'-di(t-butylperoxy)-3,3',5-trimethyl cyclohexane, 0.4 parts by weight of tricalciumphosphate, and 0.3 parts by weight of mercaptan-containing chain transfer agent were blended. The resultant solution was heated from room temperature to 80 °C for 90 minutes and kept for 240 minutes. The resultant solution reheated to 100 °C, kept for 240 minutes, then the SAN copolymer resin with 13 % by average weight of AN was prepared. The resultant was washed, dehydrated and dried. Styrene-acrylonitrile copolymer (SAN) having a weight average molecular weight of 100,000 to 140,000 was obtained.

As a result of analysis of the SAN copolymer resin, it comprises 39 parts by weight of SAN copolymer resin with 0 to 9 % by weight of acrylonitrile, 57 parts by weight of SAN copolymer resin with 9 to 20 % by weight of acrylonitrile, and 4 parts by weight of SAN copolymer resin with not less than 20 % by weight of acrylonitrile.

### (B) Polyphenylene Ether (PPE) Resin

Poly(2,6-dimethyl-1,4-phenylene) ether of Japan Asai Kasei Co. was used, its average particulate size was about several µm, and the product name of powder form was P-402.

### (C) Aromatic Phosphoric Acid Ester Compound

Triphenylphosphate (TPP) with a melting point of 48 °C was used.

**Table 1**

| | Examples | | Comparative Examples | | |
|---|---|---|---|---|---|
| | 1 | 2 | 3 | 1 | 2 |
| Rubber modified SAN graft copolymer resin(A) | | | | | |
| SAN graft copolymer resin(Ala) | 30 | - | - | - | 30 |
| Graft ABS resin(Alb) | - | 30 | 30 | 30 | - |
| SAN copolymer resin(A2a) | 45 | - | 45 | - | |
| SAN copolymer resin(A2b) | - | 32 | - | 45 | - |
| SAN copolymer resin(A2c) | - | 13 | - | - | 45 |
| Polyphenylene ether resin(B) | 25 | 25 | 25 | 25 | 25 |
| Aromatic phosphoric acid ester compound(C) | 19 | 19 | 19 | 19 | 19 |
| Izod impact strength (1/8") . | 25 | 23 | 18 | 5 | 9 |
| Flame retardancy (1/10") | V-1 | V-1 | V-1 | V-1 | V-1 |

The components to prepare resin compositions in Examples 1~3 and Comparative Examples 1~2 were blended as shown in Table 1 and extruded in the form of pellets with a twin-screw extruder at 200~ 280°C. The pellets were dried at 80 °C for 3 hours and extruded in to test specimens in a 6 oz. extruder at molding temperature of 220~280°C and barrel temperature of 40~ 80°C, and the resin pellets were molded in to test specimens. The flame retardancy of the test specimens (1/10") was measured according to UL94 VB, and the Izod impact strength of the test specimens was measured according to ASTM D-256 (1/8" notch, kgfcm/cm).

The resin compositions in Examples 1~3 3 show good impact strength and flame retardancy. Generally, the rubber modified SAN copolymer resin (g-ABS) and PPE resin in the blend do not have good compatibility each other. But in the present invention, the compatibility of g-ABS resin and PPE resin was improved by employing a SAN copolymer resin with 0 to 9 % by weight of AN and a SAN copolymer resin with 9 to 20 % by weight of AN, accordingly the resin had a good impact strength. Relatively, in Comparative Examples showed lower impact strength than Examples. In fact, unless the 1/8" impact strength of a resin is more than 10, the resin has a difficulty to be applied to electric appliances.

## Claims

1. A flameproof thermoplastic resin composition free of phenolic resin comprising:
(A) 40 to 95 parts by weight of a rubber modified SAN graft copolymer resin composed of (A₁) 20 to 100 % by weight of SAN copolymer resin with 10 to 60 % by weight of a rubber and 90 to 40 % by weight of SAN copolymer resin, and (A₂) 80 to 0 % by weight of SAN copolymer, wherein said rubber modified SAN graft resin has an average weight of 15 to 40 % by weight of acrylonitrile per the SAN resin excluding rubber component and wherein said SAN copolymer resin comprises (i) 5 to 20 % by weight of SAN copolymer resin with 0 to 9 % by weight of acrylonitrile, (ii) 10 to 40 % by weight of SAN copolymer resin with 9 to 20 % by weight of acrylonitrile, and (iii) 40 to 80 % by weight of SAN copolymer resin with 20 to 50 % by weight of acrylonitrile;
(B) 5 to 60 parts by weight of polyphenylene ether resin; and
(C) 5 to 30 parts by weight of aromatic phosphoric acid ester per 100 parts by weight of a base resin comprising (A) and (B).

2. The flameproof thermoplastic resin composition as defined in claim 1 wherein said polyphenylene ether resin (B) is poly(2,6-dimethyl-1,4-phenylene) ether.

3. The flameproof thermoplastic resin composition as defined in claim 1 or, 2 or 9 wherein said aromatic phosphoric acid ester compound (C) representing the following formula (I): 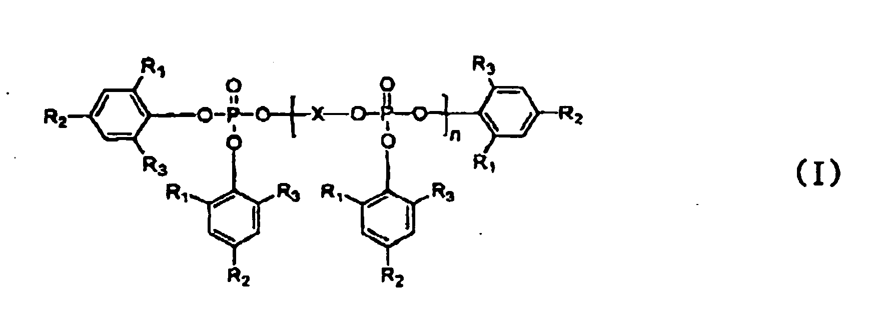 wherein R₁, R₂ and R₃ independently of one another are hydrogen or C₁-C₄ alkyl group, X is C₆-C₂₀ aryl or alkyl substituted C₆-C₂₀ aryl group and n is 0~4.

4. The flameproof thermoplastic resin composition as defined in claim 3 wherein said aromatic phosphoric acid ester compound (C) is a mixture of not less than two kinds of aromatic phosphoric acid ester compound having different n value.

5. The flameproof thermoplastic resin composition as defined in any of claims 1-4 further comprises an anti-dripping agent, a plasticizer, a heat stabilizer, an oxidation inhibitor, a light stabilizer, a compatibilizer, pigments, dyes and/or an inorganic filler.

6. The molding product prepared by the resin composition as defined in any one of claims 1-5.

## Patentansprüche

1. Feuerfeste thermoplastische Harzzusammensetzung, die frei von phenolischem Harz ist, umfassend:
(A) 40 bis 95 Gewichtsteile eines kautschuk-modifizierten SAN-Pfropfpolymerharzes zusammengesetzt aus (A₁) 20 bis 100 Gew.-% eines SAN-Copolymerharzes mit 10 bis 60 Gew.-% eines Kautschuks und 90 bis 40 Gew.-% eines SAN-Copolymerharzes, und (A₂) 80 bis 0 Gew-% eines SAN-Copolymers, wobei das kautschuk-modifizierte SAN-Pfropfharz ein durchschnittliches Gewicht von 15 bis 40 Gew.-% Acrylnitril pro SAN-Harz, ausschließlich der Kautschuk-Komponente, aufweist, und wobei das SAN-Copolymerharz (i) 5 bis 20 Gew.-% eines SAN-Copolymerharzes mit 0 bis 9 Gew-% Acrylnitril, (ii) 10 bis 40 Gew.-% eines SAN-Copolymerharzes mit 9 bis 20 Gew.-% Acrylnitril, und (iii) 40 bis 80 Gew.-% eines SAN-Copolymerharzes mit 20 bis 50 Gew.-% Acrylnitril umfaßt;
(B) 5 bis 60 Gewichtsteile eines Polyphenyfenetherharzes; und
(C) 5 bis 30 Gewichtsteile eines aromatischen Phosphorsäureesters pro 100 Teilen eines Basisharzes umfassend (A) und (B).

2. Feuerfeste thermoplastische Harzzusammensetzung nach Anspruch 1, wobei das Polyphenylenetherharz (B) Poly(2,6-dimethyl-1,4-phenylen)ether ist.

3. Feuerfeste thermoplastische Harzzusammensetzung nach Anspruch 1 oder 2, wobei die aromatische Phosphorsäureesterverbindung (C) dargestellt wird durch die folgende Formel (I): 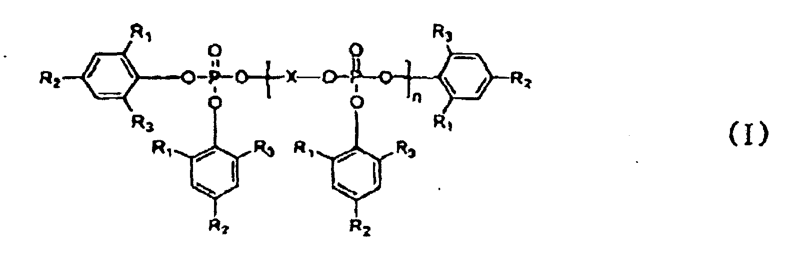 wobei R₁, R₂ und R₃ unabhängig voneinander Wasserstoff oder eine C₁-C₄-Alkylgruppe sind, X ist C₆-C₂₀ Aryl oder Alkyl substituierte C₆-C₂₀ Arylgruppe und n ist 0 bis 4.

4. Feuerfeste thermoplastische Harzzusammensetzung nach Anspruch 3, wobei die aromatische Phosphorsäureesterverbindung (C) eine Mischung von nicht weniger als 2 Arten von aromatischen Phosphorsäureesterverbindungen mit unterschiedlichen n-Werten ist.

5. Feuerfeste thermoplastische Harzzusammensetzung nach eine der Ansprüche 1 bis 4, des weiteren umfassend Antitropfmittel, Weichmacher, Hitzestabilisator, Oxidationsinhibitor, Lichtstabilisator, Kompatibilitätsmittel, Pigment, Farbstoff und/oder anorganisches Füllmittel.

6. Formteil hergestellt aus der feuerfesten thermoplastischen Harzzusammensetzung, wie sie in einem der Ansprüche 1 bis 5 definiert ist.

## Revendications

1. Composition de résine thermoplastique ignifuge exempte de résine phénolique, comprenant :
(A) 40 à 95 parties en poids d'une résine de copolymère greffée SAN modifiée au caoutchouc composée de (A₁) 20 à 100 % en poids de résine de copolymère SAN avec 10 à 60 % en poids d'un caoutchouc et 90 à 40 % en poids de résine de copolymère SAN, et (A₂) 80 à 0 % en poids de copolymère SAN, dans laquelle ladite résine greffée SAN modifiée au caoutchouc a un poids moyen de 15 à 40 % en poids d'acrylonitrile pour la résine SAN à l'exclusion de la composante de caoutchouc et dans laquelle ladite résine de copolymère SAN comprend (i) 5 à 20 % en poids de résine de copolymère SAN avec 0 à 9 % en poids d'acrylonitrile, (ii) 10 à 40 % en poids de résine de copolymère SAN avec 9 à 20 % en poids d'acrylonitrile, et (iii) 40 à 80 % en poids de résine de copolymère SAN avec 20 à 50 % en poids d'acrylonitrile ;
(B) 5 à 60 parties en poids de résine d'éther de polyphénylène ; et
(c) 5 à 30 parties en poids d'ester d'acide phosphorique aromatique pour 100 parties en poids d'un résine de base comprenant (A) et (B).

2. Composition de résine thermoplastique ignifuge telle que définie dans la revendication 1, dans laquelle ladite résine d'éther de polyphénylène (B) est du poly(2,6-diméthyl-1,4-phénylène) éther.

3. Composition de résine thermoplastique ignifuge telle que définie dans la revendication 1 ou 2, dans laquelle ledit composé d'ester d'acide phosphorique aromatique (C) se représente selon la formule suivante (I) : 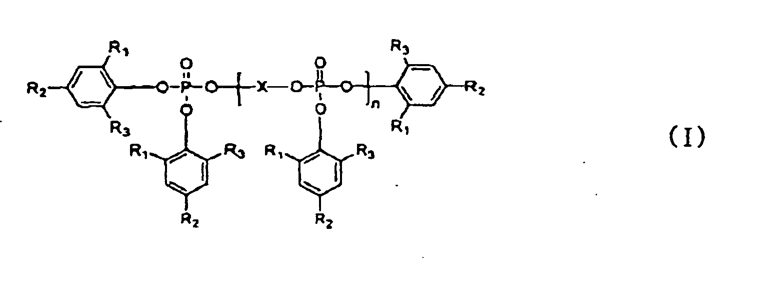 où R₁, R₂ et R₃ sont indépendamment les uns des autres de l'hydrogène ou un groupe alkyle en C₁-C₄, X est un groupe aryle en C₆-C₂₀ ou un groupe aryle en C₆-C₂₀ substitué alkyle et n est 0~ 4.

4. Composition de résine thermoplastique ignifuge telle que définie dans la revendication 3, dans laquelle ledit composé d'ester d'acide phosphorique aromatique (C) est un mélange d'au moins deux sortes de composé d'ester d'acide phosphorique aromatique ayant une valeur n différente.

5. Composition de résine thermoplastique ignifuge telle que définie dans l'une quelconque des revendications 1-4, comprenant également un agent anti-égouttement, un plastifiant, un stabilisant thermique, un inhibiteur d'oxydation, un stabilisant de lumière, un agent compatible, des pigments, des colorants et/ou une charge inorganique.

6. Produit de moulage préparé par la composition de résine telle que définie dans l'une quelconque des revendications 1-5.
